**Europäisches Patentamt**

**European Patent Office**

**Office européen des brevets**

(19)

(11) Veröffentlichungsnummer: **0 258 852**
**B1**

(12) **EUROPÄISCHE PATENTSCHRIFT**

(45) Veröffentlichungstag der Patentschrift:
18.07.90

(51) Int. Cl.⁵: **F16F 1/54, B60K 5/12**

(21) Anmeldenummer: 87112606.6

(22) Anmeldetag: 29.08.87

(54) **Lager zur elastischen Abstützung von Maschinen.**

(30) Priorität: 05.09.86 DE 3630360

(43) Veröffentlichungstag der Anmeldung:
09.03.88 Patentblatt 88/10

(45) Bekanntmachung des Hinweises auf die Patenterteilung:
18.07.90 Patentblatt 90/29

(84) Benannte Vertragsstaaten:
DE ES FR GB IT SE

(56) Entgegenhaltungen:
DE-A- 1 580 538
DE-A- 3 116 721
DE-U- 1 973 202

(73) Patentinhaber: METZELER Gesellschaft mit
beschränkter Haftung, Gneisenaustrasse 15,
D-8000 München 50(DE)

(72) Erfinder: Heynemann, Carl, Flurweg 15,
D-8082 Taufkirchen(DE)
Erfinder: Hundt, Werner, Friedrich-Engelsbogen 5,
D-8000 München 83(DE)

(74) Vertreter: Michelis, Theodor, Dipl.-Ing.,
Gneisenaustrasse 15, D-8000 München 50(DE)

## Beschreibung

Die Erfindung bezieht sich auf ein Lager zur elastischen Abstützung von Maschinen, insbesondere Motoren, mit einem starren prismatischen Rahmen zur Aufnahme eines Haltebolzens für die Maschinenlagerung sowie beiderseitigen, symmetrisch zueinander liegenden vulkanisierten Gummipuffern, die sich auf einem Träger abstützen.

Aus der DE-U 1 973 202 ist ein elastisches Keillager bekannt, das nach diesem Prinzip aufgebaut ist. Bei einem derartigen Keillager besteht üblicherweise der starre Rahmen aus Metall, der zwar einerseits eine hohe Festigkeit und eine sichere Verankerung des eigentlichen Haltebolzens für den abzustützenden Motor aufweist, andererseits aber sehr schwer ist und darüber hinaus selbst zu Schwingungen angeregt werden kann, die zusätzlich zu unerwünschten Schwingungsüberlagerungen führt.

Ein ähnliches Keillager ist aus der DE-A 1 580 538 bekannt, bei dem der äußere, die Gummipuffer abstützende Träger aus Kunststoff, z.B. einem glasfaserverstärkten Polyamid, hergestellt ist. Über das Material des innenliegenden Rahmens ist jedoch nichts ausgesagt.

Der Erfindung liegt daher die Aufgabe zugrunde, ein derartiges Lager zu schaffen, das sich durch sehr geringes Gewicht auszeichnet, nicht korrosionsanfällig ist und dennoch eine optimale Festigkeit auch im Hinblick auf die Verankerung des Haltebolzens aufweist und eine biegesteife Übertragung der eingeleiteten Kräfte auf die Gummipuffer erlaubt.

Zur Lösung dieser Aufgabe ist erfindungsgemäß vorgesehen, daß der Rahmen aus faserverstärktem Kunststoff besteht, in den der Botzen, die obere Rahmenwandung durchdringend, eingesetzt ist, daß der Bolzen einen verbreiterten Fuß aufweist der auf seiner innerhalb des Rahmens liegenden Oberfläche von Kunststoff ummantelt ist und über vertikale, sich auf dem verdickten Fuß abstützende Wandungen gegen Auszugskräfte abgestützt ist.

Bei einem derart ausgebildeten Lager weist der Rahmen ein sehr geringes Gewicht auf, bietet aber dennoch hinreichende Festigkeit zur Übertragung der auftretenden Kräfte. Durch die Verankerung des Bolzens durch den Kunststoff und die den verbreiterten Fuß abstützenden Wandungen wird einem Herausziehen des Bolzens so viel Widerstand entgegengesetzt, daß ein völliges Lösen des Bolzens vom Lager sicher vermieden wird. Darüber hinaus ist der Wärmefluß vom Motorträger zu den abstützenden Gummipuffern erheblich vermindert, was sich positiv auf die Lebensdauer auswirkt.

Die abstützenden Wandungen können dabei durch die Seitenwände des prismatischen Rahmens oder aber auch - ggf. zusätzlich - durch radial vom Kunststoff ummantelten Bolzen ausgehenden Rippen gebildet sein, die den freien Querschnitt des Rahmens ausfüllen.

Zweckmäßig ist es, wenn der Bolzen in Höhe der oberen Rahmenfläche ein scheibenförmiges metallisches Lager aufweist, das in den Kunststoff eingebettet ist. Dieses scheibenförmige Auflager kann am Umfang gezahnt oder mehreckig ausgebildet sein, um damit gleichzeitig als Verdrehsicherung zu wirken. Darüber hinaus kann der Bolzenfuß auf seiner Unterseite Ausnehmungen zur Verankerung im Kunststoff aufweisen, wodurch ebenfalls eine Sicherung gegen Verdrehen bewirkt wird.

Der Rahmen selbst kann dabei einen trapezförmigen oder einen dreieckigen Querschnitt aufweisen, wobei bei einer dreieckigen Ausbildung mit einer Spitze nach unten die beiden seitlichen Dreiecksschenkel gleichzeitig zur Abstützung des verbreiterten Bolzenfußes dienen.

Vom besonderen Vorteil ist es, wenn der Rahmen mit Rippen und eingebettetem Bolzen ein in einem kunststoffspezifischen Urformverfahren hergestelltes Kunststoffteil ist.

Anhand einer schematischen Zeichnung sind Aufbau und Funktionsweise eines Ausführungsbeispiels nach der Erfindung näher erläutert. Dabei zeigen:

Fig. 1 eine Seitenansicht eines derartigen Lagers,
Fig. 2 einen horizontalen Schnitt durch das Lager entsprechend der Schnittlinie II-II nach Fig. 1,
Fig. 3 einen Vertikalschnitt allein durch den trapezförmigen Rahmen entsprechend der Schnittlinie III-III nach Fig. 2,
Fig. 4 einen Querschnitt durch ein Lager mit dreieckigem Rahmen und
Fig. 5 einen Längsschnitt durch ein entsprechendes Lager.

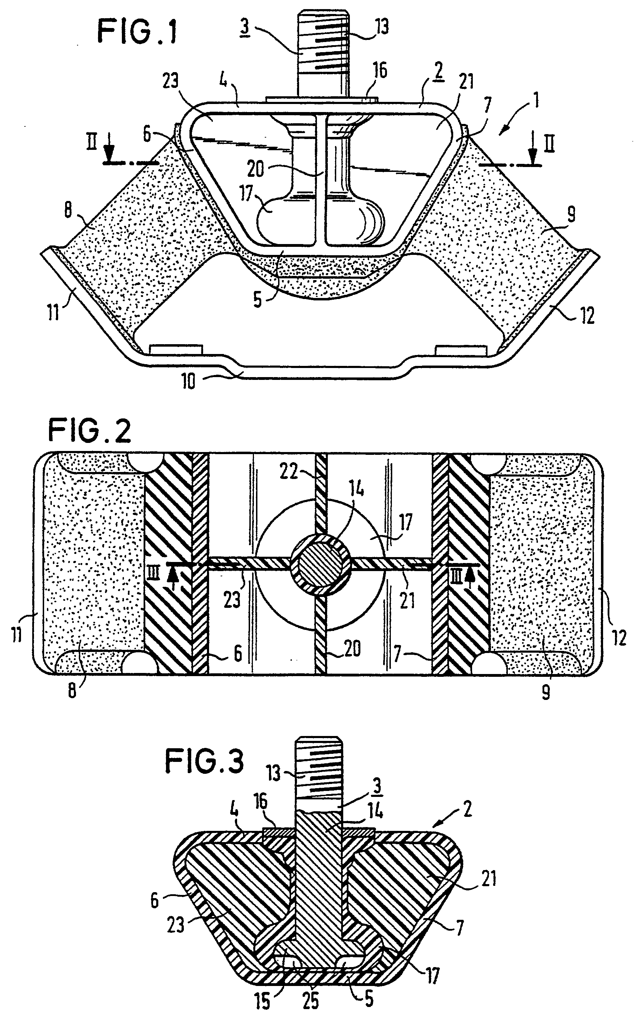

Bei dem in den Fig. 1 bis 3 dargestellten Ausführungsbeispiel ist ein Lager mit trapezförmigem Rahmen gewählt worden. Selbstverständlich ist aber auch jeder andere prismatische Querschnitt für den Rahmen möglich, da er auch dann nach dem gleichen Grundprinzip aufgebaut ist.

Wie zunächst aus Fig. 1 zu ersehen ist, weist das Lager 1 einen trapezförmigen Rahmen 2 praktisch als Lagerbock zur Aufnahme und Halterung des Lagerbolzens 3 auf, an dem der nicht näher dargestellte Motor abgestützt wird. Dieser Rahmen 2 besteht aus einer oberen Rahmenfläche 4, einer unteren Rahmenfläche 5 sowie den beiden unter einem Winkel geneigten Seitenflächen 6 und 7, an denen schräg nach unten ragend die beiden Gummipuffer 8 und 9 haftend befestigt sind, die wiederum von einem Flansch 10 mit angenähert V-förmig aufgebogenen Enden 11 und 12 abgestützt werden.

Der Rahmen 2 besteht aus einem glasfaserverstärkten Kunststoff mit einer relativ hohen Temperaturbeständigkeit. Als Kunststoffmaterial eignet sich besonders Polyamid. Es können aber auch Polycarbonat oder lineare Polyester verwendet werden, wobei jedoch eine gute Bindung an den Gummi gewährleistet sein muß.

In diesem Rahmen 2 befindet sich oben der Lagerbolzen 3 aus Metall, der einen Gewindekopf 13, ein zylindrisches Mittelteil 14 und einen kugelförmig verdickten Fußbereich 15 aufweist und in Höhe der oberen Rahmenfläche 4 mit einem scheibenförmigen Auflager 16 als eigentliche Lagerplatte für den Motor versehen ist, wobei dieses Auflager 16 die obere Rahmenfläche 4 geringfügig überragen muß.

Zweckmäßig ist es dabei, wenn der Außenumfang dieses Auflagers 16 gezahnt oder mehreckig ausgebildet ist, um damit gleichzeitig als Verdrehsicherung zu dienen und um ggf. eine Verdrehung auch leichter optisch erkennen zu können.

Der Bolzen 3 ist in seinem innerhalb des Rahmens 2 liegenden Bereich allseitig mit Kunststoff 17 umgeben, so daß sich für diesen Bolzen 3 die in Fig. 1 besonders deutlich zu ersehende Außenkontur ergibt. Der Bolzenfuß 15 weist dabei zweckmäßigerweise einen größeren Durchmesser als das obere Auflager 16 und damit die entsprechende Öffnung in der oberen Lagerfläche 4 auf.

Damit ist einmal sichergestellt, daß bei einem möglichen Ausreißen des Bolzens 3 dieser zumindest von der oberen Rahmenfläche 4 gebremst und zurückgehalten wird. Zur zusätzlichen Abstützung gegen Auszugskräfte und Querkräfte wird der Bolzen 3 und insbesondere der Fußbereich 15,17 durch radiale Rippen 20,21,22 und 23 gehalten und abgestützt, die von den äußeren Kunststoffwandungen 17 ausgehen und sich - wie man insbesondere aus Fig. 2 ersicht - bis zu den seitlichen Trapenzflächen 6 und 7 erstrecken und in der Höhe von der oberen Rahmenfläche 4 bis zur unteren Rahmenfläche 5 reichen. Damit wird der Bolzen 3 gegen Auszugs- oder Querkräfte zusätzlich abgestützt. Falls dennoch diese Auszugskräfte ein bestimmtes Maß überschreiten, werden zunächst die Rippen 20 bis 23 zerdrückt werden und damit einen Teil der auftretenden Energie vernichten. Im Extremfall wird aber dann der Fuß 15 gegen die obere Rahmenfläche stoßen und dort zurückgehalten, so daß die Gefahr eines völligen Lösens des Motors von seinen Auflagern erheblich vermindert ist.

Um zusätzlich ein Verdrehen des Bolzens 3 zu verhindern, weist dieser auf der Unterseite des verbreiterten Bolzenfußes 15 nutenförmige Aussparungen 25 auf, die von Kunststoff ausgefüllt werden (was jedoch wegen der besseren Übersichtigkeit hier nicht dargestellt wurde), um damit den Bolzen 3 zusätzlich zu arretieren.

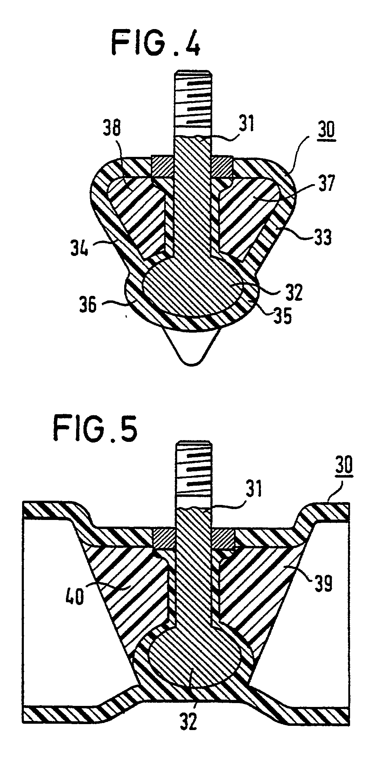

Ein weiteres Ausführungsbeispiel der Gestaltung eines derartigen Rahmens ist in den Fig. 4 und 5 dargestellt, wobei der Rahmen 30 einen dreieckigen Querschnitt mit der Spitze nach unten aufweist. In diesen Rahmen ist in gleicher Weise ein Bolzen 31 mit kugelförmig verdicktem Fuß 32 eingesetzt, wobei dieser Fuß 32 aber einen solchen Außendurchmesser aufweist, daß er die schräg nach unten zulaufenden Seitenwandungen 33 und 34 des Rahmens 30 schneidet. Das bedeutet also, daß die Seitenwandungen 33 und 34 im Bereich des Bolzenfußes 32 sich unmittelbar auf diesem abstützen und damit die Sicherung des Bolzens 31 gegen Herausreißen bewirken. Die Wandungen 33 und 34 weisen an diesen Stellen entsprechende Auswölbungen 35 und 36 auf, so daß auch hier der Bolzenfuß 32 allseitig von dem Kunststoffmaterial des Rahmens 30 umgeben ist. Zusätzlich sind auch hier entsprechende Querrippen 37 und 38 vorgesehen, die den freien Querschnitt des Rahmens 30 ausfüllen. Wie man aus Fig. 5 ersieht, sind zusätzlich noch Rippen 40 und 39 in Längsrichtung vorgesehen, die ebenfalls sich auf dem Fuß 32 abstützen.

Rahmen mit Umhüllung des Bolzens und den radialen Rippen werden zweckmäßigerweise in einem Arbeitsgang in einem Urformverfahren, z.B. Spritzgießteil, gefertigt, so daß sich ein einheitliches, stabiles und homogenes Bauteil ergibt.

Es sei dabei darauf hingewiesen, daß die unterschiedlich gerichtete Schraffur in den Fig. 2 und 3 nur gewählt wurde, um die einzelnen Funktionsteile besser zu kennzeichnen und zu unterscheiden. Tatsächlich handelt es sich um ein homogen gespritztes Teil aus einem einheitlichen Material und einheitlicher Festigkeit ohne Trennstellen oder gesonderte Verbindungsmaterialien in den Funktions-Grenzbereichen.

Durch die Fertigung aus Kunststoff kann somit das Gewicht des Lagers als Ganzes wesentlich reduziert werden. Außerdem können Korrosionen im Bereich des Rahmens praktisch nicht mehr auftreten. Wegen der geringen Wärmeleitung des Kunststoffes werden auch die Gummipuffer und deren Haftflächen nur einer geringeren Temperatur ausgesetzt, wodurch ihre Haltbarkeit erheblich erhöht wird.

## Patentansprüche

1. Lager (1) zur elastischen Abstützung von Maschinen, insbesondere Motoren, mit einem starren, prismatischen Rahmen (2, 30) zur Aufnahme eines Haltebolzens (3, 31) für die Maschine sowie beidseitig symmetrisch zueinander liegenden anvulkanisierten Gummipuffern (8, 9), die sich auf einem Träger (10) abstützen, dadurch gekennzeichnet, daß der Rahmen (2, 30) aus faserverstärktem Kunststoff besteht, in den der Bolzen (3, 31), die obere Rahmenwandung (4) durchdringend eingesetzt ist, daß der Bolzen einen verbreiterten Fuß (15, 32) aufweist, der Bolzen auf seiner innerhalb des Rahmens (2, 30) liegenden Oberfläche von Kunststoff (17; 35, 36) gleichmäßig ummantelt ist und über vertikale, sich auf dem verdickten Fuß (15, 32) abstützenden Wandungen (20...23; 33, 34; 27...40) gegen Auszugskräfte abgestützt ist.

2. Lager nach Anspruch 1, dadurch gekennzeichnet, daß die abstützenden Wandungen durch die Seitenwände (33, 34) des prismatischen Rahmens (30) gebildet sind.

3. Lager nach Anspruch 1 oder 2, dadurch gekennzeichnet, daß die abstützenden Wandungen durch radial von dem mit Kunststoff ummantelten Bolzen (3, 31) ausgehende Rippen (20...23; 37...40) gebildet sind, die den freien Querschnitt des Rahmens (2; 30) ausfüllen.

4. Lager nach Anspruch 1, dadurch gekennzeichnet, daß der Bolzen ( 3; 31) in Höhe der oberen Rahmenfläche ein scheibenförmiges metallisches Auflager (16) aufweist, das in den Kunststoff des Rahmens eingebettet ist.

5. Lager nach Anspruch 4, dadurch gekennzeichnet, daß das scheibenförmige Auflager (16) einen von einer Kreislinie abweichenden Umfang aufweist.

6. Lager nach einem der Ansprüche 1 bis 5, dadurch gekennzeichnet, daß der Bolzenfuß (15) auf seiner Unterseite Ausnehmungen (25) zur Verankerung im Kunststoff aufweist.

7. Lager nach einem oder mehreren der Ansprüche 1 bis 6, dadurch gekennzeichnet, daß der Rahmen (2) trapezförmigen Querschnitt aufweist.

8. Lager nach einem oder mehreren der Ansprüche 1 bis 6, dadurch gekennzeichnet, daß der Rahmen (30) dreieckigen Querschnitt mit der Spitze nach unten aufweist.

9. Lager nach Anspruch 8, dadurch gekennzeichnet, daß der verdickte Bolzenfuß (32) einen solchen Durchmesser aufweist, daß er die Ebenen der Seitenwandungen (33, 34) des Rahmens (30) zumindest teilweise durchdringt und diese Wandungen (33, 34) an diesen Stellen entsprechende Auswölbungen (35, 36) aufweisen.

10. Lager nach Anspruch 1 bis 9, dadurch gekennzeichnet, daß als Kunststoff faserverstärktes Polyamid verwendet ist.

11. Verfahren zur Herstellung eines Lagers nach den Ansprüchen 1 bis 10, dadurch gekennzeichnet, daß der Rahmen mit eingebettetem Bolzen und Rippen einstückig in einem Urformverfahren als Kunststoffteil hergestellt ist.

## Claims

1. Bearing (1) for resiliently supporting machines, in particular engines, having a rigid prismatic frame (2, 30) for accommodating a retaining pin (3, 31) for the machine as well as rubber buffers (8, 9) which are located on both sides of the frame symmetrically relative to one another, are vulcanised on the frame and are supported on a bearer (10), characterised in that the frame (2, 30) is made of fibre-reinforced plastic into which the pin (3, 31), penetrating the upper frame wall (4), is inserted, in that the pin has a broadened foot (15, 32), is encased uniformly in plastic (17, 35, 36) on its surface within the frame (2, 30) and is braced against extraction forces by means of vertical walls (20...23; 33, 34; 37...40) resting on the broadened foot (15, 32).

2. Bearing according to claim 1, characterised in that the supporting walls are formed by the side walls (33, 34) of the prismatic frame (30).

3. Bearing according to claim 1 or 2, characterised in that the supporting walls are formed by ribs (20...23; 37...40) which extend radially from the plastic-encased pin (3, 31) and fill the clear cross-section of the frame (2; 30).

4. Bearing according to claim 1, characterised in that the pin (3; 31) has at the level of the upper frame surface a disk-shaped metal bearing (16) which is embedded in the plastic of the frame.

5. Bearing according to claim 4, characterised in that the disk-shaped bearing (16) has a periphery which varies from a circular line.

6. Bearing according to claims 1 to 5, characterised in that the foot (15) of the pin has on its underside recesses (25) for anchoring in the plastic.

7. Bearing according to one or more of claims 1 to 6, characterised in that the frame (2) is trapezoidal in cross-section.

8. Bearing according to one or more of claims 1 to 6, characterised in that the frame (30) is triangular in cross-section, with the apex pointing downwards.

9. Bearing according to claim 8, characterised in that the diameter of the thickened foot (32) of the pin is such that the foot at least partially penetrates the planes of the side walls (33, 34) of the frame (30) and these walls (33, 34) have corresponding bulges (35, 36) at these points.

10. Bearing according to claims 1 to 9, characterised in that fibre-reinforced polyamide is used as a plastic.

11. Process for manufacturing a bearing according to claims 1 to 10, characterised in that the frame with embedded pin and ribs is manufactured in a single piece as a plastic part using a master pattern process.

## Revendications

1. Support (1) destiné à supporter élastiquement des machines, notamment des moteurs, comprenant un cadre (2, 30) prismatique et rigide de réception d'un boulon de fixation (3, 31) de la machine, ainsi que des tampons en caoutchouc vulcanisés (8, 9), qui sont disposés des deux côtés symétriquement l'un de l'autre et qui s'appuient sur un support (10), caractérisé en ce que le cadre (2, 30) est en matière plastique renforcée de fibres, dans laquelle est monté le boulon (3, 31) traversant la paroi supérieure du cadre (4) en ce que le boulon comporte un pied (15, 32) élargi, le boulon étant entouré uniformément, sur sa surface se trouvant à l'intérieur du cadre (2, 30), de matière plastique (17, 35, 36) et étant retenu, à l'encontre de forces d'extraction, par des parois (20....23; 33, 34; 37...40) verticales s'appuyant sur le pied (15, 32) épaissi.

2. Support suivant la revendication 1, caractérisé en ce que les parois d'appui sont formées par les parois latérales (33, 34) du cadre prismatique (30).

3. Support suivant la revendication 1 ou 2, caractérisé en ce que les parois d'appui sont formées par des nervures (20...23; 37...40) issues radialement du boulon (3, 31) entouré de matière plastique et remplissant la section transversale libre du cadre (2; 30).

4. Support suivant la revendication 1, caractérisé en ce que le boulon (3, 31) comporte, au niveau de la surface supérieure du cadre, un appui métallique (16) en forme de disque qui est enrobé de la matière plastique du cadre.

5. Support suivant la revendication 4, caractérisé en ce que l'appui (16) en forme de disque a un pourtour s'écartant d'une ligne circulaire.

6. Support suivant l'une des revendications 1 à 5, caractérisé en ce que le pied du boulon (15) comporte, sur son côté inférieur, des évidements (25) d'ancrage dans la matière plastique.

7. Support suivant l'une ou plusieurs des revendications 1 à 6, caractérisé en ce que le cadre a une section transversale trapézoïdale.

8. Support suivant l'une ou plusieurs des revendications 1 à 6, caractérisé en ce que le cadre (30) a une section transversale triangulaire à sommet dirigé vers le bas.

9. Support suivant la revendication 8, caractérisé en ce que le pied épaissi du boulon (32) a un diamètre tel qu'il traverse a moins partiellement les plans des parois latérales (33, 34) du cadre (30) et ces parois (33, 34) comportent en ces emplacements des parties correspondantes bombées vers l'extérieur (35, 36).

10. Support suivant l'une des revendications 1 à 9, caractérisé en ce que du polyamide renforcé de fibres est utilisé comme matière plastique.

11. Procédé de fabrication d'un support suivant les revendications 1 à 10, caractérisé en ce que le cadre avec le boulon enrobé et les nervures est fabriqué d'un seul tenant, en tant que pièce en matière plastique, dans un procédé de moulage d'origine.

FIG.1

FIG.2

FIG.3

## FIG.4

## FIG.5